# EUROPÄISCHE PATENTANMELDUNG

(11) **EP 0 538 592 A2**
(43) Veröffentlichungstag der Anmeldung: **28.04.1993**
(21) Anmeldenummer: 92114780.7
(22) Anmeldetag: 27.08.1992
(51) Int. Cl.: G11B 27/028, G11B 27/022, G11B 27/031, G11B 27/10, G11B 27/34, G03B 31/00, H04H 7/00, G11B 27/00

(54) **Verfahren zur Tonnachbearbeitung und Vorrichtung zur Durchführung des Verfahrens**

(30) Priorität: 27.08.1991 DE 4128327
(71) Anmelder: Behrens, Joachim, D-22177 Hamburg (DE); Dahlmann, Uwe, D-22927 Grosshansdorf (DE)
(72) Erfinder: Behrens, Joachim, D-22177 Hamburg (DE); Dahlmann, Uwe, D-22927 Grosshansdorf (DE)
(74) Vertreter: Dipl.-Ing. H. Hauck Dipl.-Ing. E. Graalfs Dipl.-Ing. W. Wehnert Dr.-Ing. W. Döring Dr.-Ing. N. Siemons

(57) **Zusammenfassung**

Vorrichtung zur Durchführung eines Verfahrens zur Tonnachbearbeitung mit Abspieleinrichtungen für das Ausgangsmaterial mit den verschiedenen Aufnahmen, wobei die Abspieleinrichtungen für Aufnahmen des Ausgangsmaterials mit zu verschiebenden Aufnahmeabschnitten einen digitalen Speicher mit wahlfreiem Zugriff haben, Steuereinrichtungen zur synchronisierten Antriebssteuerung der Abspieleinrichtungen, wobei die Steuereinrichtungen einen Digitalrechner insbesondere für den Zugriff auf die Speicher der Abspieleinrichtungen haben, einem mit der Steuereinrichtung gekoppelten Bedienfeld mit Stelleinrichtungen für die Steuerung der Abspieleinrichtungen in Vorlauf- und Rücklaufrichtung, wobei das Bedienfeld Einrichtungen zum Markieren asynchroner Aufnahmeabschnitte und Verschieben markierter Aufnahmeabschnitte entlang der Zeitachse hat, und Wiedergabeeinrichtungen für von den Abspieleinrichtungen abgespielte Aufnahmen, wobei das Bedienfeld einen Fahrregler für die Steuerung der Abspieleinrichtungen in Vor- und Rücklaufrichtung hat.

## Beschreibung

Gegenstand der Erfindung sind ein Verfahren zur Tonnachbearbeitung sowie eine Vorrichtung zur Durchführung des Verfahrens nach den Oberbegriffen der Ansprüche 1 und 4.

Eine Tonnachbearbeitung wird vor allem bei der Film- oder Video-Sprachsynchronisation, häufig aber auch in reinen Tonstudios vorgenommen. Stets geht es darum, verschiedene Aufnahmen von Ton und gegebenenfalls Bild zu synchronisieren, d.h. zeitlich optimal aufeinander abzustimmen. Im Regelfall werden dazu die Ton- gegenüber den Bildaufnabmen verschoben.

Die derzeitigen Arbeitsweisen bei der Video- und Ton-Nachbearbeitung sind zeitaufwendig und personalintensiv. So erfordert typischerweise das Ersetzen der Fremdsprache eines Filmes durch die Landessprache eine Reihe von Arbeitsgängen. Von dem angelieferten Film- oder Videomaterial werden zunächst Video-Arbeitskopien angefertigt. Diese werden mit einem Zeitcode versehen, der das Auffinden jedes einzelnen Bildes mittels spezieller technischer Einrichtungen ermöglicht. Die Arbeitskopie wird in Sprach- oder Geräuschabschnitte ("Takes") aufgeteilt. Dabei wird jeder Satz, jedes Geräusch und jede Musikeinspielung mit einer Takenummer versehen und zusammen mit dem dazugehörigen Zeitcode von Takeanfang und Takeende in einem Rechner gespeichert. Parallel wird eine Rohübersetzung des fremdsprachigen Textes in die gewünschte Sprache angefertigt. Der übersetzte Text wird mit Hilfe einer Video-Arbeitskopie so umgeschrieben, daß nach Möglichkeit Satzlänge und Mundbewegungen der gewünschten Sprache denen der Originalsprache ähnlich sind. Ferner werden geeignete Sprecher für die einzelnen Rollen gewählt und Termine abgesprochen. Ein Rechner sortiert sämtliche "Takes" aus, die der jeweils anwesende Sprecher zu sprechen hat. Bei der Aufnahme sieht der Sprecher das Bild der Video-Arbeitskopie auf einem Monitor. Das Bild kommt von einem Videorecorder, der synchron mit einer Tonaufnahmemaschine gekoppelt ist. Durch die Verkopplung der gleichlangen Bänder gehört zu jedem Videotake das entsprechend mitlaufende Tonbandstück. Es kann mit einer mehrspurigen Tonmaschine (mit 8, 16 oder 24 Tonspuren) gearbeitet werden, wobei für die Sprecher meist jeweils zwei Spuren reserviert werden, welche von Take zu Take abwechselnd besprochen werden, um Überlappungen zu ermöglichen. Weitere Spuren sind für Geräusche und Musik reserviert. Es ist auch üblich, mit Zweispur-Perfomaschinen (Tonbandmaschinen für rand-perforierte Tonbänder) zu arbeiten. Die verschiedenen Tonaufnahmen können dann auf separaten Bändern ausgeführt werden, die später wieder synchron zueinander abgespielt werden müssen. Jeder Take wird dem Sprecher mehrfach vorgespielt, so daß er sich in der Sprechgeschwindigkeit und den Lippenbewegungen dem Videobild anpassen kann. Hat sich der Sprecher so optimal auf den Take vorbereitet, kann der fast synchron zum Bild gesprochene Text aufgezeichnet werden.

Die nachfolgende Tonnachbearbeitung ist der wohl aufwendigste Teilvorgang, bei dem der schon aufgenommene Ton in seiner Position (Synchronität) zum Bild korrigiert werden muß. Im Extremfall muß dies für jedes Wort einzeln geschehen. Bei Billig-Produktionen wird dieser Arbeitsgang meist aus Kostengründen weggelassen. Die Aufnahme mit einer Mehrspur-Tonmaschine läßt diesen Arbeitsgang ohne Umspielen der einzelnen Spulen auf Einzelbänder mit ein bis zwei Spuren herkömmlicherweise nicht mehr zu. Man kann nämlich auf einem Mehrspurband die verschiedenen Spuren nicht gegeneinander verschieben, um eine eventuelle Asynchronität der Aufnahmen auf verschiedenen Spuren zu korrigieren. Dafür muß eine Überspielung auf andere Tonträger erfolgen. Im Normalfall wird ein- oder zweispurig auf Perfobänder überspielt. Mit diesem Perfomaterial geht man an einen Tonschneidetisch, wo alle benötigten Spuren einzeln zur Bearbeitung zur Verfügung stehen. Nun ist es möglich, alle Spuren durch Verschieben, Herausschneiden oder Einfügen von Bandmaterial so aneinander anzupassen, daß die Töne entsprechend dem Bildmaterial synchron zueinander vorliegen.

Die verschiedenen Aufnahmen haben auch nach der Nachbearbeitung die gleiche Lautstärke und sind weder mit Hall noch mit Echo versehen. Bei der anschließenden Mischung werden alle Tonbänder synchron mit dem Videoband gekoppelt und wiedergegeben. Alle Töne laufen über ein Mischpult, an dem ein Tonmeister die Lautstärken korrigiert, Ein-, Über- oder Abblendungen durchführt, und schließlich Hall oder Echo hinzugibt. Der gemischte Ton wird auf einem zusätzlichen Tonband (Master-Recorder) als Aufzeichnungseinrichtungsynchron aufgenommen. Schließlich wird in der Regel der gemischte Ton vom Master-Recorder synchron auf Kopien des Originalbildes überspielt. Nun ist das Bildmaterial mit der gewünschten Sprache versehen. Das Ton- und Bildträgermaterial kann verschieden sein, wobei z.B. ein digitaler Speicher für den Ton und eine Bildplatte für das Bild vorgesehen sein können.

Die Aufnahmetechnik der Mehrzahl der reinen Tonstudios entspricht in etwa den Synchronstudios bei Billig-Produktionen. Abgesehen von High-End-Studios der Musikindustrie ist Tonnachbearbeitung vorstehender Art noch nicht verbreitet. Aufnahmen werden typischerweise mit Mehrspurmaschinen gemacht, so daß Asynchronitäten die Neuaufnahme der entsprechenden Spur unter hohem Aufwand erfordern. Wie in der Filmtechnik sind auch hier die ersten Digital Recording-Systeme im Einsatz. Diese sind jedoch für kleine bis mittlere Studios noch nicht rentabel und außerdem noch nicht untereinander kompatibel.

Davon ausgehend liegt der Erfindung die Aufgabe zugrunde, ein weniger zeit- und kostenaufwendiges Verfahren zur Tonnachbearbeitung mit möglichst verbesserter Flexibilität zur Verfügung zu stellen, das sich weitestmöglich herkömmliche Bedienschritte bedient. Außerdem soll eine Vorrichtung zur Durchführung des Verfahrens bereitgestellt werden.

Die Lösung dieser Aufgabe ist in den Ansprüchen 1 und 4 angegeben. Vorteilhafte Ausgestaltungen ergeben sich aus den Unteransprüchen.

Bei einem erfindungsgemäßen Verfahren wird also beispielsweise von einer Video-Sprachsynchronisation oder einer Tonaufnahme ausgegangen. Es liegt also eine komplette Nachvertonung oder Tonaufnahme verteilt auf mehrere Spuren in fester zeitlicher Zuordnung zueinander vor. Das Verfahren ist nun in der Lage, diese Zuordnung aufzubrechen und Abschnitte der verschiedenen Aufnahmen unabhängig von den anderen Aufnahmen zu verschieben. Hierzu werden asynchrone Aufnahmeabschnitte durch gleichzeitige Wiedergabe verschiedener Aufnahmen aufgedeckt und durch Markierungen eingegrenzt. Die eingegrenzten Bereiche werden probeweise entlang der Zeitachse bis zum Erreichen von Synchronität verschoben, ohne daß das Ausgangsmaterial verändert würde. Auch nach Erreichen von Synchronität bleibt das Ausgangsmaterial unverändert und werden "Versatzdaten" gespeichert, welche die Information für das Synchronisieren des Aufnahmeabschnittes enthalten. Erst nach entsprechender vollständiger Überarbeitung des gesamten Ausgangsmaterials wird das Endmaterial durch Überspielen des Ausgangsmaterials erzeugt, indem entsprechend der ermittelten Versatzdaten eine Verschiebung asynchroner Aufnahmeabschnitte in eine synchrone Position erfolgt. Dabei ermöglicht die Positionscodierung, z.B. ein fortlaufender Zeitcode, das Auffinden asynchroner Aufnahmeabschnitte.

Die Aufnahmen mit zu verschiebenden Aufnahmeabschnitten werden bevorzugt mit wahlfreiem und praktisch direktem Zugriff entlang der Zeitachse gelesen, so daß die Verschiebung zum probeweisen Erreichen von Synchronität bzw. zum Überspielen praktisch ohne Zeitverlust erfolgen kann. In einem einfachen Fall können die verschiedenen Aufnahmen grundsätzlich entlang der Zeitachse gelesen werden, wobei die Aufnahmen mit zu verschiebenden Aufnahmeabschnitten in zu bearbeitenden Teilen zwischengespeichert und danach die zwischengespeicherten Teile mit direktem Zugriff entlang der Zeitachse gelesen werden. Hierbei wird also das Ausgangsmaterial zunächst in herkömmlicher Weise gelesen, so daß übliche Mehrspur-Tonbandtechnik eingesetzt werden kann.

Vorrichtungstechnisch wird ein Verfahren zur Tonnachbearbeitung bevorzugt realisiert, indem die Abspieleinrichtungen für Aufnahmen des Ausgangsmaterials mit zu verschiebenden Aufnahmeabschnitten einen digitalen Speicher mit wahlfreiem Zugriff haben, auf den ein Digitalrechner als Steuereinrichtung unter Berücksichtigung einer gewünschten Verschiebung oder der Versatzdaten Zugriff nimmt. Weitere Aufgaben des Digitalrechners sind in der Ermittlung und Sicherung der Versatzdaten und dem Überspielen nach Abarbeitung des Ausgangsmaterials zu sehen. Die Vorrichtung kann das Endmaterial aber auch durch unmittelbares Überspielen der synchronisierten Aufnahmeabschnitte ohne Sicherung von Versatzdaten erstellen. Ein mit dem Digitalrechner gekoppeltes Bedienfeld hat Einrichtungen zum Markieren und Verschieben markierter Aufnahmeabschnitte entlang der Zeitachse, deren Betätigung das Schneiden und Kleben von Bandmaterial ersetzt. Außerdem hat es eine Steuereinrichtung für die Kontrolle der Abspieleinrichtungen in Vorlauf- und Rücklaufrichtung, die einen Fahrregler hat. Damit kann der Vorlauf- und Rücklauf in der gewöhnten Weise gesteuert werden, wobei jedoch die Vorteile der elektronischen Synchronisation genutzt werden. Außerdem kann das Bedienfeld Tasten zum Koppeln von Abspieleinrichtungen mit dem Fahrregler oder zum Koppeln von Abspieleinrichtungen aneinander haben. Beim Koppeln der Abspieleinrichtungen mit dem Fahrregler wird die Vorlauf- und Rücklaufgeschwindigkeit von letzterem gesteuert, wogegen beim Koppeln von Abspieleinrichtungen der Fahrregler abgeschaltet und der Vorlauf- und Rücklauf von zumindest einer Abspieleinrichtung bestimmt wird.

Bevorzugt sind die Einrichtungen zum Markieren asynchroner Aufnahmeabschnitte Tasten des Bedienfeldes. Die Einrichtungen zum probeweisen Verschieben markierter Aufnahmeabschnitte entlang der Zeitachse sind bevorzugt als Drehgeber des Bedienfeldes ausgebildet. Als Endlosband-Geber ausgebildete Drehgeber zeigen durch ihre Einstellung sinnfällig die Verschiebung der Aufnahmeabschnitte relativ zueinander an.

Insbesondere für zeitgleiche Bearbeitung nur eines Teils der Aufnahmen der Abspieleinrichtungen kann das Bedienfeld Tasten zum Auswählen zu bearbeitender Aufnahmen haben. Dann braucht nicht für jede Aufnahme ein Drehgeber vorgesehen zu sein.

Die Vorrichtung kann digitale Audio-Recordereinheiten als Abspieleinrichtung aufweisen und für Bild-Sprachsynchronisation eine Bildwiedergabequelle haben, z.B. einen Video-Recorder ggfs. mit harddisc als Speichermedium, eine optical disc oder einen Film. In Kombination mit mindestens einer (Mehrspur-)Tonbandmaschine kann sie digitale Audio-Verzögerungseinheiten haben, die einen wahlfreien Zugriff entlang der Zeitachse ermöglichen. Der Aufzeichnungseinrichtung kann ein Mischpult oder eine andere Einrichtung zur Veränderung der Aufnahmen vorgeordnet sein, um beim Überspielen einen Abgleich der verschiedenen Lautstärken und sonstige Toneffekte zu verwirklichen. Ein Videomonitor der Wiedergabeeinrichtungen ermöglicht eine Synchronisation von Ton- und Bildaufnahmen. Die Tonaufnahmen werden solange verschoben, bis sie sich in Synchronität zur Bildaufnahme befinden. Bevorzugt weist der Digitalrechner einen Datenmonitor auf, welcher den laufenden Zeitcode, Status des Bild- und Tonträgers sowie den Tonversatz in Millisekunden anzeigen kann. Auf dem Monitor kann aber auch die Hüllkurve ausgewählter Tonspuren dargestellt werden.

Mit der Erfindung wird eine kostengünstige Alternative zur herkömmlichen Tonnachbearbeitung zur Verfügung gestellt. Die Bearbeitungsflexibilität wird erheblich verbessert, insbesondere weil das Ausgangsmaterial erhalten bleibt und Aufnahmeabschnitte bis hin zu einzelnen Wörtern probeweise verschoben werden können. Produktionszeiten werden erheblich verkürzt und Materialkosten durch drastische Senkung des Tonbandverbrauches reduziert. Die Erfindung kann mit marktüblichen Tonträgersystemen (Analogband, RDAT, Harddisk, Digitalband (DASH), Digitalkassette etc.) als Teil der Abspieleinrichtungen und Aufzeichnungseinrichtungen und Aufzeichnungseinrichtung zusammenarbeiten. Das Endmaterial kann aber auch ohne Fixierung, auf einen Tonträger unmittelbar auf einen Sender gegeben werden. Es dürfte beim Anwender eine gute Akzeptanz finden, weil es weitgehend an etablierten Bedienschritten und Bedieneinrichtungen festhält.

Eine Variante der Erfindung sieht vor, daß das Ausgangsmaterial erstellt wird, indem vorzugsweise asynchrone Ton- oder Bildabschnitte entlang der Zeitachse verschoben aufgenommen werden. Hierzu werden die Abschnitte vor der Aufnahme verzögert.

Weitere Einzelheiten und Vorteile des Gegenstandes der Erfindung ergeben sich aus der nachfolgenden Beschreibung der zugehörigen Zeichnungen, die verschiedene Aspekte der Erfindung zeigen. In den Zeichnungen zeigen:
- Fig. 1: eine herkömmliche Vorrichtung zur Tonnachbearbeitung bei der Video-Sprachsynchronisation mit Perfomaschinen in schematischer Darstellung;
- Fig. 2: eine herkömmlilche Vorrichtung zur Tonnachbearbeitung bei der Video-Sprachsynchronisation mit Mehrspurrecorder in schematischer Darstellung;
- Fig. 3: eine erfindungsgemäße Vorrichtung zur Tonnachbearbeitung bei der Video-Sprachsynchronisation mit digitalen Verzögerungseinrichtungen in schematischer Darstellung;
- Fig. 4: eine erfindungsgemäße Vorrichtung zur Tonnachbearbeitung bei der Video-Sprachsynchronisation mit digitalen Audio-Recordereinheiten in schematischer Darstellung;
- Fig. 5: Bedienfeld der Vorrichtung gemäß Fig. 4 in vergrösserter Draufsicht;
- Fig. 6: Monitordarstellung eines Datenmonitors der Vorrichtung gemäß Fig. 4.

Bei den nachfolgenden Ausführungsbeispielen sind einander entsprechende Einrichtungen mit denselben Bezugsziffern gekennzeichnet.

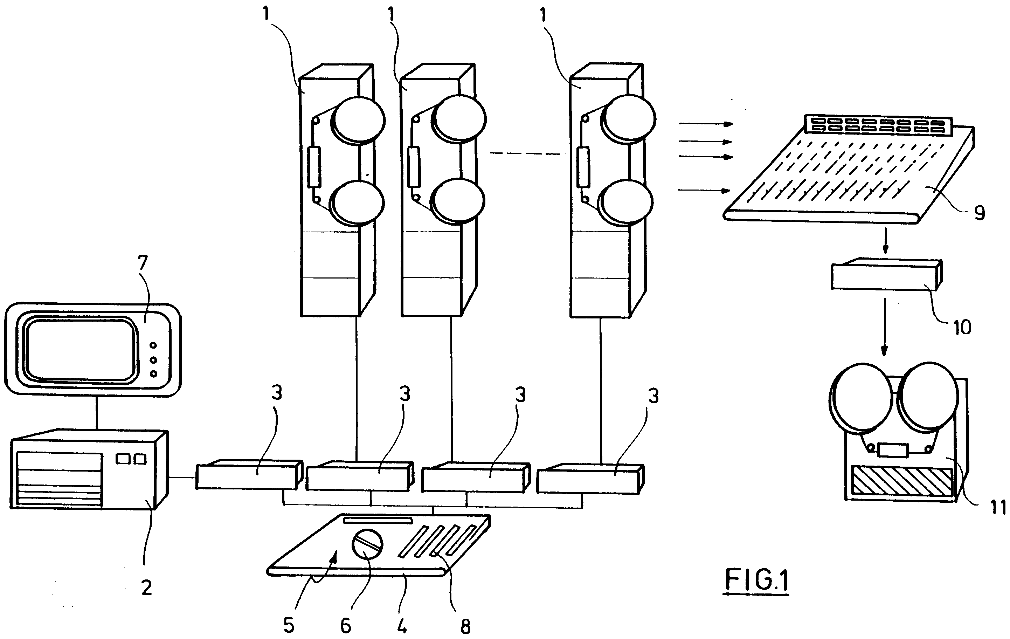

Bei einer herkömmlichen Vorrichtung gemäß Fig. 1 sind mehrere Schnelläufer-Perfomaschinen 1 (erfahrungsgemäß mindestens fünf) und ein Videorecorder 2 über Synchronisationseinrichtungen 3 mit einer Steuereinrichtung 4 mit Bedienfeld 5 verbunden. Das Bedienfeld 5 weist im wesentlichen einen Fahrregler 6 auf, der einen synchronen Vor- und Rücklauf der Perfomaschinen 1 und des Videorecorders 2 mit variabler Geschwindigkeit ermöglicht.

Die Perfomaschinen 1 sind mit nicht dargestellten Ton-Wiedergabeeinrichtungen auf und der Videorecorder 2 mit einem Monitor 7 zur Bildwiedergabe verbunden. Dies erlaubt das Feststellen von Asynchronitäten, die durch Verschieben, Herausschneiden und Einfügen von Bandmaterial an einem Tonschneidetisch 8 beseitigt werden.

Sind die Perfobänder solchermaßen umgearbeitet, werden die verschiedenen Tonaufnahmen über ein Mischpult 9 und Einrichtungen 10 für Toneffekte auf einen Master-Recorder 11 überspielt. Von dort kann der neu entstandene und gemischte Ton mit den Bildaufnahmen verbunden werden.

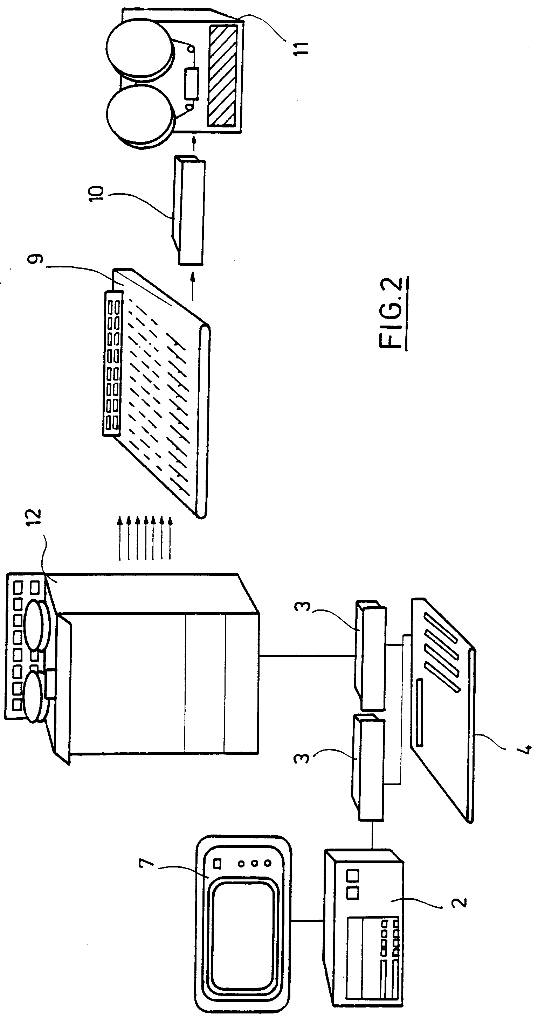

Die Fig. 2 zeigt eine vereinfachte Vorrichtung für Low-Cost-Produktionen, bei der statt mehrerer Perfobänder eine Mehrspur-Tonmaschine 12 Verwendung findet. Diese und ein Videorecorder 2 mit einem Monitor 7 sind wiederum über Synchronisationseinrichtungen 3 mit einer gemeinsamen Steuereinrichtung 4 verbunden. Ein Fahrtregler entfällt hier, weil nach dem Bespielen des Mehrspurbandes keine Beseitigung von Asynchronitäten mehr möglich ist. Dieser vereinfachte Bearbeitungsplatz ermöglicht nur ein Mischen der verschiedenen Aufnahmen mittels des Mischpultes 9 und die Berücksichtigung von Toneffekten mittels einer geeigneten Einrichtung 10, bevor das Tongemisch auf einem Masterrecorder 11 abgespeichert wird.

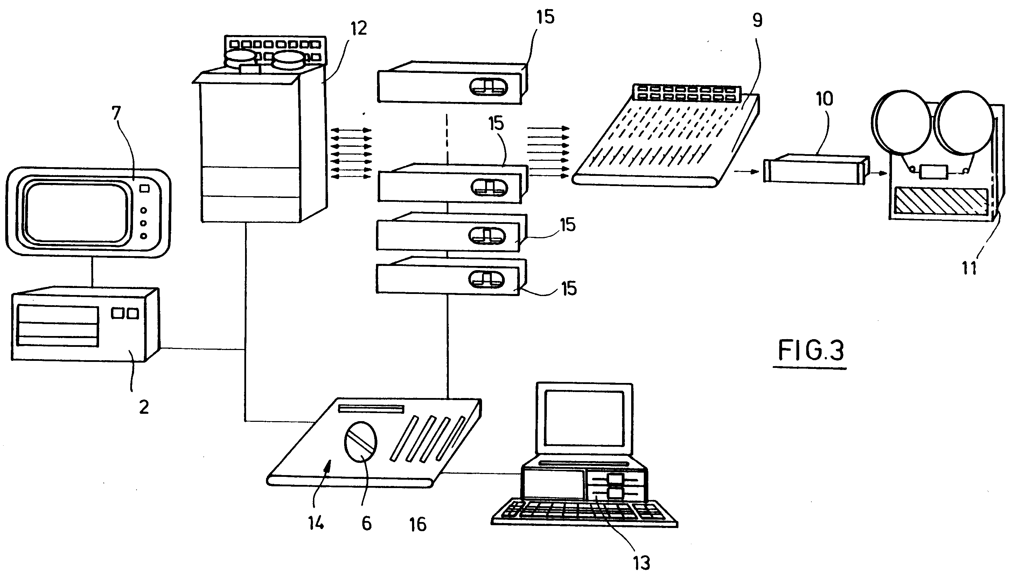

Fig. 3 betrifft bereits eine Tonnachbearbeitungsvorrichtung nach der Erfindung, die sich ebenfalls einer Mehrspurtonmaschine 12 bedient, die gemeinsam mit einem Videorecorder 2 mit angekoppeltem Monitor 7 synchron von einer Steuereinrichtung in Form eines Digitalrechners 13 gesteuert wird. Der Digitalrechner 13 ist mit einem Bedienfeld 14 gekoppelt, welches mit einem herkömmlichen Fahrtregler 6 für die synchrone Steuerung von Mehrspur-Recorder 12 und Videorecorder 2 im Vor- und Rücklauf bei variabler Geschwindigkeit vorgesehen ist.

Die Tonsignale der verschiedenen Spuren des Mehrspur-Recorders gelangen zu digitalen Audio-Verzögerungseinheiten 15 ("ADU", d.h. "Audio Delay Unit"). Die Verzögerungseinheiten 15 nehmen jeweils etwa die letzten 10 Sekunden des Tons einer Spur in einen RAM-Zwischenspeicher mit wahlfreiem und praktisch direktem Zugriff auf. Innerhalb dieser 10 Sekunden können die verschiedenen Aufnahmen an verschiedenen Stellen der Verzögerungseinheiten 15 ausgelesen und somit entlang der Zeitachse gegeneinander verschoben werden. Dafür hat die ADU einen Rechner, der ein Audio-Signal digital speichern und programmiert zeitversetzt wiedergeben kann. Bei einer Wiedergabe mittels einer - nicht dargestellten - Wiedergabeeinrichtung lassen sich so probeweise Asynchronitäten ausgleichen.

Das probeweise Verzögern oder Vorziehen der verschiedenen Tonaufnahmen wird mittels des Bedienfeldes 14 gesteuert, der dafür Verschiebeeinrichtungen 16 aufweist, die auch als "Jogregler" (Drehgeber) bezeichnet werden und als "Endlessbelt" (mit Stelleinrichtung in Form eines Endlosbandes) ausgeführt sind. Der ergonomische Hintergrund dieser Verschiebeeinrichtungen ist die Analogie zwischen ausgeübter Bewegung und dem Resultat der Verschiebung der ursprünglich auf Tonband vorliegenden Aufnahmen. Zuvor müssen die zu verschiebenden Aufnahmeabschnitte noch durch Markierungen eingegrenzt werden, wofür das Bedienfeld 14 oder die Steuereinrichtung 13 Tasten aufweist. Die Steuereinrichtung 13 speichert die bei der probeweisen Verschiebung ermittelten Zeitversätze sowie die zugeordneten Aufnahmen sowie deren Positionen auf dem Ausgangsmaterial ab. Der Digitalrechner 13 übernimmt die gesamte Datenverarbeitung, wie die Synchronüberwachung, Zeitcodelesung, Maschinenkontrolle der Video- und Audiomaschine sowie die Kontrolle des Bedienfeldes.

Beim endgültigen Überspielen auf einen Masterrecorder 11 unter Beeinflussung der verschiedenen Aufnahmen mittels Mischpult 9 und Einrichtung 10 für Toneffekte werden die Tonversatzdaten von der Steuereinrichtung 13 abgerufen, um über die Verzögerungseinheiten 15 einen Ausgleich von Asynchronitäten zu bewirken.

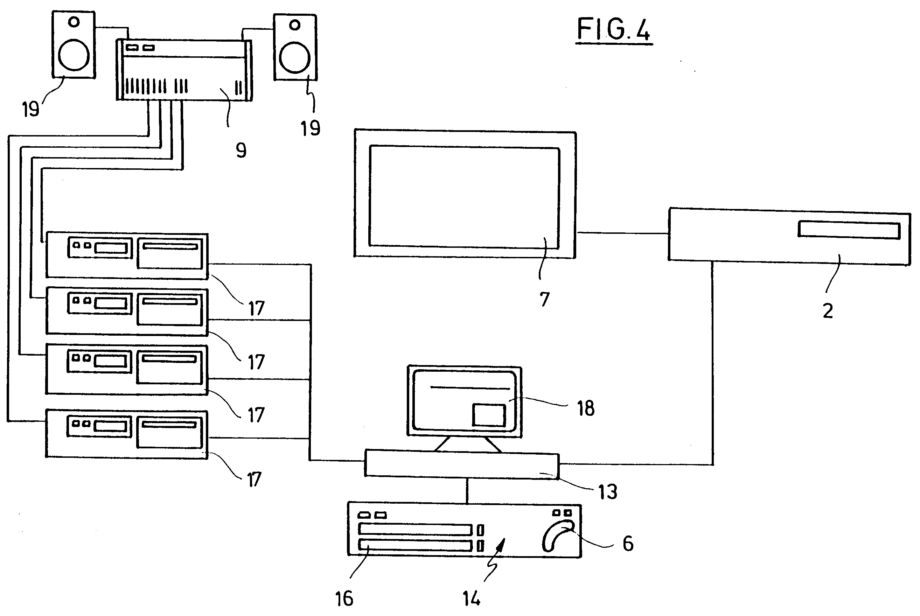

Bei der weiteren erfindungsgemäßen Tonnachbearbeitungsvorrichtung gemäß Fig. 4 werden die verschiedenen Tonaufnahmen vollständig von digitalen Recordereinheiten 16 gespeichert. Diese werden synchron von einer Steuereinrichtung in Form eines Digitalrechners 13 gesteuert, der wiederum ein Bedienfeld 14 mit einem Fahrtregler 6 für Vor- und Rücklauf aufweist. Auch dieses Bedienfeld 14 ist mit Jogreglern 16 versehen, die ein Verschieben der Aufnahmen zweier Recordereinheiten 17 gegeneinander entlang der Zeitachse ermöglichen. Dafür gestatten die digitalen Recordereinheiten 17 einen beliebigen direkten Zugriff auf das Audiosignal entlang der Zeitachse und sind mit einer nicht dargestellten Wiedereingabevorrichtung verbunden.

Der Rechner 13 steuert synchron zu den Recordereinheiten einen Videorecorder 2, der wiederum einen Videomonitor 7 aufweist.

Ein Datenmonitor 18 des Rechners 13 ermöglicht über eine optische Darstellung einer Hüllkurve mit Tonsignalen eine Feinsynchronisation und zeigt zudem nützliche Daten über den Bearbeitungszustand der Einrichtung an.

Entsprechend den obigen Ausführungsbeispielen sind auch die Recordereinheiten 17 als Tonaufnahmespeicher über ein Mischpult 9 mit Lautsprechern 19 einer Wiedereingabeeinrichtung verbunden, die auch mit einem Master-Recorder gekoppelt sein können.

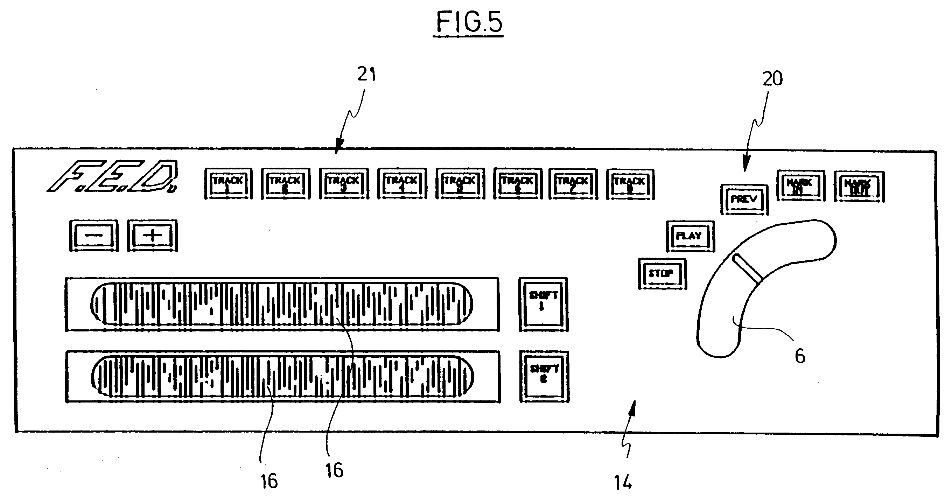

In der Fig. 5 sind Einzelheiten des Bedienfeldes 14 gezeigt. Der Fahrtregler 6 ist bedienfreundlich in einem etwa viertelkreisförmigen Segment ausgebildet. Darüber ist ein Tastenfeld 20 angeordnet, mittels dem die Wiedergabeeinrichtungen gestoppt und gestartet, eine Wiederholung ausgelöst sowie Anfangs- und Endmarken für asynchrone Aufnahmebereiche gesetzt werden können. Mittels eines Tastenfeldes 21 können zwei von acht Spuren eines Mehrspuren-Tonbandgerätes auf Jogregler 16 in Form sinnfälliger Endlosbänder für eine gegenseitige Verschiebung entlang der Zeitachse gelegt werden. Weitere Tasten können für andere Funktionen vorgesehen sein.

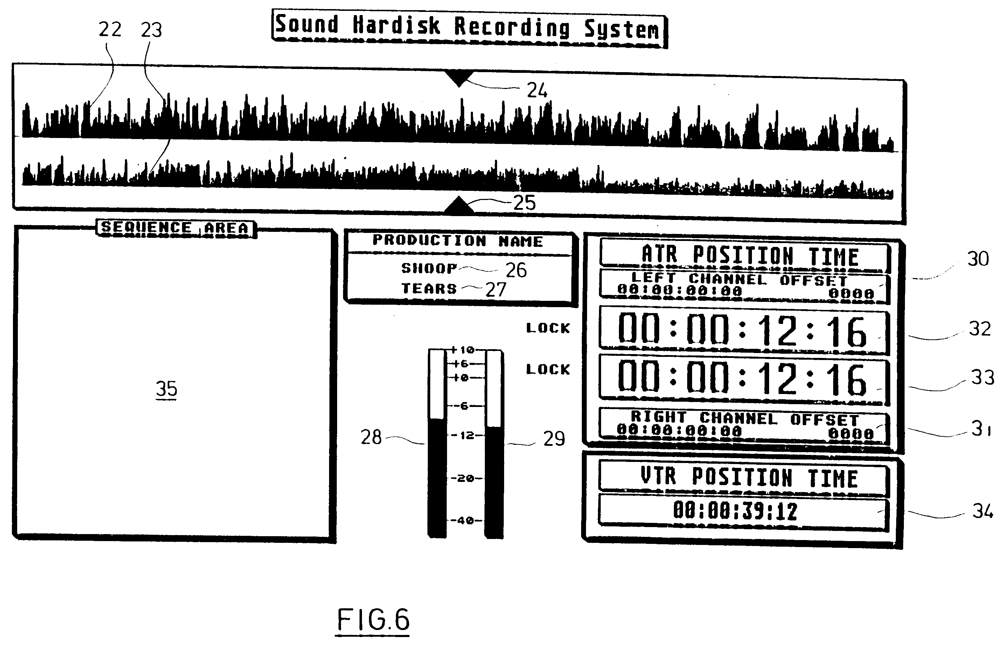

Der Fig. 6 sind Einzelheiten der Monitordarstellung des Datenmonitors 18 gemäß Fig. 4 entnehmbar. Im oberen Bilddrittel erstrecken sich über beinahe die gesamte Bildbreite die Hüllkurven 22, 23 zweier verschiedener TonaufnahmeSpuren. Jeder Hüllkurve 22, 23 ist eine Hörmarke 24, 25 für die soeben wiedergegebene Aufnahmestelle zugeordnet. Jede Hüllkurve ist von einem Rahmen umgeben.

Unter den Hüllkurven 22, 23 befindet sich in einem weiteren Rahmen eine Anzeige mit willkürlichen Spurnamen 26, 27 für die den Hüllkurven zugeordneten Tonaufnahmen. Darunter sind Pegelaussteuerungen 28, 29 mit Dezibelangaben für die Aufnahmespuren positioniert.

In der Mitte des rechten Teils der Darstellung befinden sich in einem weiteren Kasten Anzeigen 30, 31 für den Versatz zwischen Ton der beiden Kanäle und zugeordnetem Bild. Jede Anzeige 30, 31 enthält dafür links unten eine numerische Anzeige für Stunden, Minuten, Sekunden und Zahl der Bilder.

Zwischen den Anzeigen 30, 31 ist für jede Aufnahmespur als Positionscode ein Zeitcode 32, 33 angegeben. Von links nach rechts werden wiederum Stunden, Minuten, Sekunden und die Zahl der Bilder angezeigt. In entsprechender Darstellung ist im rechten unteren Kasten ein Zeitcode 34 der Videoaufnahme angegeben.

Ein linker unterer Kasten 35 ist für Takeinformationen wie Takenamen sowie Position des Takes auf der Zeitachse vorgesehen.

## Patentansprüche

1. Verfahren zur Tonnachbearbeitung, bei dem aus einem Ausgangsmaterial mit verschiedenen Aufnahmen von Ton oder Ton und Bild in fester gegenseitiger und zumindest teilweise asynchroner Zuordnung eine Positionscodierung zugeordnet, verschiedene Aufnahmen des Ausgangsmaterials zwecks Ermittlung asynchroner Aufnahmeabschnitte gleichzeitig wiedergegeben, die ermittelten asynchronen Aufnahmebereiche markiert, die verschiedenen Aufnahmen unter probeweiser Verschiebung der markierten Bereiche entlang der Zeitachse bis zum Erreichen von Synchronität wiedergegeben, und aus dem Ausgangsmaterial durch Verschieben asynchroner Aufnahmeabschnitte entlang der Zeitachse ein Endmaterial mit synchroner Zuordnung der verschiedenen Aufnahmen gewonnen wird, dadurch gekennzeichnet, daß die Verschiebung der markierten Aufnahmeabschnitte entlang der Zeitachse beim Erreichen von Synchronität als Zeitversatz zusammen mit Anfang und Ende der markierten Aufnahmeabschnitte im Ausgangsmaterial zugeordneten Positionscodes und einem Hinweis über die jeweilige Aufnahme des Ausgangsmaterials (Versatzdaten) gespeichert, und nach entsprechender vollständiger Bearbeitung sämtlicher Aufnahmen das Endmaterial durch Überspielen des Ausgangsmaterials unter Verschiebung von Aufnahmeabschnitten mit gespeichertem Hinweis gekennzeichneter Aufnahmen zwischen den zugehörigen gespeicherten Positionscodes für Anfang und Ende um die zugehörigen gespeicherten Zeitversätze entlang der Zeitachse erstellt wird.

2. Verfahren nach Anspruch 1, dadurch gekennzeichnet, daß die Aufnahmen mit zu verschiebenden Aufnahmeabschnitten mit wahlfreiem Zugriff entlang der Zeitachse vom Ausgangsmaterial gelesen und wiedergegeben oder überspielt werden.

3. Verfahren nach Anspruch 1, dadurch gekennzeichnet, daß die verschiedenen Aufnahmen entlang der Zeitachse vom Ausgangsmaterial gelesen, Aufnahmen mit zu verschiebenden Aufnahmeabschnitten in zu bearbeitenden Teilen zwischengespeichert und danach die zwischengespeicherten Teile mit wahlfreiem Zugriff entlang der Zeitachse gelesen und wiedergegeben oder überspielt werden.

4. Vorrichtung zur Durchführung eines Verfahrens zur Tonnachbearbeitung, insbesondere nach einem der Ansprüche 1 bis 3, mit Abspieleinrichtungen für das Ausgangsmaterial mit den verschiedenen Aufnahmen, wobei die Abspieleinrichtungen (15, 17) für Aufnahmen des Ausgangsmaterials mit zu verschiebenden Aufnahmeabschnitten einen digitalen Speicher mit wahlfreiem Zugriff haben, Steuereinrichtungen zur synchronisierten Antriebssteuerung der Abspieleinrichtungen, wobei die Steuereinrichtungen einen Digitalrechner (13) insbesondere für den Zugriff auf die Speicher der Abspieleinrichtungen haben, einem mit der Steuereinrichtung gekoppelten Bedienfeld mit Stelleinrichtungen für die Steuerung der Abspieleinrichtungen in Vorlauf- und Rücklaufrichtung, wobei das Bedienfeld (14) Einrichtungen zum Markieren asynchroner Aufnahmeabschnitte und Verschieben markierter Aufnahmeabschnitte entlang der Zeitachse hat, und Wiedergabeeinrichtungen für von den Abspieleinrichtungen abgespielte Aufnahmen, dadurch gekennzeichnet, daß das Bedienfeld (14) einen Fahrregler (16) für die Steuerung der Abspieleinrichtungen in Vor- und Rücklaufrichtung hat.

5. Vorrichtung nach Anspruch 4, dadurch gekennzeichnet, daß das Bedienfeld (14) Tasten zum Koppeln von Abspieleinrichtungen mit dem Fahrregler oder zum Koppeln von Abspieleinrichtungen aneinander hat.

6. Vorrichtung nach Anspruch 4 oder 5, dadurch gekennzeichnet, daß das Bedienfeld (14) Tasten (20) zum Markieren asynchroner Aufnahmeabschnitte hat.

7. Vorrichtung nach einem der Ansprüche 4 bis 6, dadurch gekennzeichnet, daß das Bedienfeld (14) Drehgeber (16) für das probeweise Verschieben markierter Aufnahmeabschnitte entlang der Zeitachse hat.

8. Vorrichtung nach Anspruch 7, ddurch gekennzeichnet, daß der Drehgeber (16) als Endlosband-Geber ausgeführt ist.

9. Vorrichtung nach einem der Ansprüche 4 bis 8, dadurch gekennzeichnet, daß das Bedienfeld Tasten zum Auswählen zu bearbeitender Aufnahmen hat.

10. Vorrichtung nach einem der Ansprüche 4 bis 4, dadurch gekennzeichnet, daß die Abspieleinrichtungen (15, 17) digitale Audio-Recordereinheiten aufweisen.

11. Vorrichtung nach einem der Ansprüche 4 bis 10, dadurch gekennzeichnet, daß die Abspieleinrichtungen mindestens eine Tonbandmaschine und von diesen gespeiste digitale Audio-Verzögerungseinheiten aufweisen.

12. Vorrichtung nach einem der Ansprüch 4 bis 11, dadurch gekennzeichnet, daß den Aufzeichnungseinrichtungen Einrichtungen zur Veränderung der Aufnahmen beim Überspielen wie ein Mischpult (9) vorgeordnet sind.

13. Vorrichtung nach einem der Ansprüche 4 bis 12, dadurch gekennzeichnet, daß die Abspieleinrichtungen eine Bildwiedergabequelle (2), wie einen Videorecorder, einen Filmprojektor oder eine digitale Bildwiedergabeeinrichtung aufweisen.

14. Vorrichtung nach einem der Ansprüche 4 bis 13, dadurch gekennzeichnet, daß die Wiedergabeeinrichtungen eine Bildwiedergabeeinrichtung, wie einen Bildmonitor (4, 7) oder eine Projektionsleinwand haben.

15. Vorrichtung nach einem der Ansprüche 4 bis 14, dadurch gekennzeichnet, daß der Digitalrechner (13) einen Datenmonitor (18) aufweist.

16. Vorrichtung nach einem der Ansprüche 4 bis 15, dadurch gekennzeichnet, daß der Digitalrechner (13) zudem der Ermittlung und Sicherung von Versatzdaten und Überspielen des Ausgangsmaterials nach Maßgabe der Versatzdaten dient.
